(19) Europäisches Patentamt / European Patent Office / Office européen des brevets

(11) **EP 2 398 005 A1**

(12) **EUROPEAN PATENT APPLICATION**
published in accordance with Art. 153(4) EPC

(43) Date of publication:
**21.12.2011 Bulletin 2011/51**

(51) Int Cl.:
*G09F 9/00* (2006.01)    *G02F 1/1333* (2006.01)
*G09F 9/40* (2006.01)

(21) Application number: **10741074.8**

(22) Date of filing: **09.02.2010**

(86) International application number:
**PCT/JP2010/000779**

(87) International publication number:
**WO 2010/092794 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.02.2009 JP 2009029107**

(71) Applicant: **Sharp Kabushiki Kaisha**
**Osaka-shi, Osaka 545-8522 (JP)**

(72) Inventors:
• **TOMOTOSHI, Takuma**
  **Osaka 545-8522 (JP)**
• **WATANABE, Hisashi**
  **Osaka 545-8522 (JP)**

(74) Representative: **Müller-Boré & Partner**
**Patentanwälte**
**Grafinger Straße 2**
**81671 München (DE)**

(54) **DISPLAY DEVICE AND METHOD OF MANUFACTURING SAME**

(57) A direct-viewing type display device **100A** includes: at least one display panel **10** which has a display region **10A** and a frame region **10F** provided outside the display region, the display region **10A** and the frame region **10F** being separated by a boundary **B1** extending in a first direction **D1**; and at least one light-transmitting cover **20** provided on a viewer side of the at least one display panel **10**. The at least one light-transmitting cover **20** includes a lens portion **22** which is disposed astride the boundary **B1,** the lens portion **22** being configured to refract part of light going out from the display region **10A** in the frame region **10F**. A light exit surface **22a** of the lens portion **22** is a curved surface, and at least part of the light exit surface **22a** is provided with an antireflection treatment. According to the present invention, a direct-viewing type display device is provided in which the frame region of the display panel is obscured, and reflection of the environment in the lens portion is prevented.

*FIG.1*

EP 2 398 005 A1

**Description**

**TECHNICAL FIELD**

The present invention relates to a display device and a method of manufacturing a display device, and more particularly to a direct-viewing type display device and a method of manufacturing a direct-viewing type display device.

**BACKGROUND ART**

Traditionally, in television sets and display devices for displaying information, attempts have been made at realizing a pseudo large-screen display device by arraying a plurality of display devices (which may be referred to as a tiling technique). However, using the tiling technique has a problem of visible joints between the plurality of display devices.
This problem is now described by taking a liquid crystal display device for example. A liquid crystal display device includes a liquid crystal display panel, a backlight device, circuits for supplying various electrical signals to the liquid crystal display panel, and a power supply, as well as a housing in which to accommodate these. The liquid crystal display panel includes a pair of glass substrates and a liquid crystal layer provided between them. On one of the pair of glass substrates, for example, pixel electrodes, TFTs and bus lines are disposed. On the other glass substrate, color filter layers and a counter electrode are disposed. Moreover, the liquid crystal display panel has a display region in which a plurality of pixels are arrayed, and a frame region around it. In the frame region, a sealing portion for ensuring that the pair of substrates oppose each other and also sealing and retaining the liquid crystal layer, an implementation of driving circuitry for driving the pixels, and the like are provided.
Since no pixels are arrayed in the frame region, the frame region does not contribute to displaying. Thus, when constructing a large screen by arraying a plurality of liquid crystal display panels, joints will occur in the image. This problem is not limited to liquid crystal display devices, but is a problem common to direct-viewing type display devices, e.g., PDPs, organic EL display devices, and electrophoresis display devices.
Patent Documents 1 and 2 disclose a display device for displaying a jointless image on a display panel. The display devices described in Patent Documents 1 and 2 include a light-transmitting cover on the viewer's side of the display panel. An edge portion of the light-transmitting cover includes a portion in which the viewer-side surface is curved. The curved portion functions as a lens, and therefore will be referred to as a "lens portion" hereinafter. The lens portion of the light-transmitting cover is provided so as to overlap the frame region of the display panel and a portion of a region of the display region adjoining the frame region. A portion of the display region that overlaps the lens portion will be referred to as a "peripheral display region". Light which goes out from pixels which are arrayed in the peripheral display region is refracted by the lens portion in the frame region. As a result, an image is also displayed on the front face of the frame region, so that a jointless image is displayed on the entire screen.

**CITATION LIST**

**PATENT LITERATURE**

Patent Document 1: Japanese Laid-Open Patent Publication No. 2000-180964
Patent Document 2: Japanese PCT National Phase Laid-Open Publication No. 2004-524551

**SUMMARY OF INVENTION**

**TECHNICAL PROBLEM**

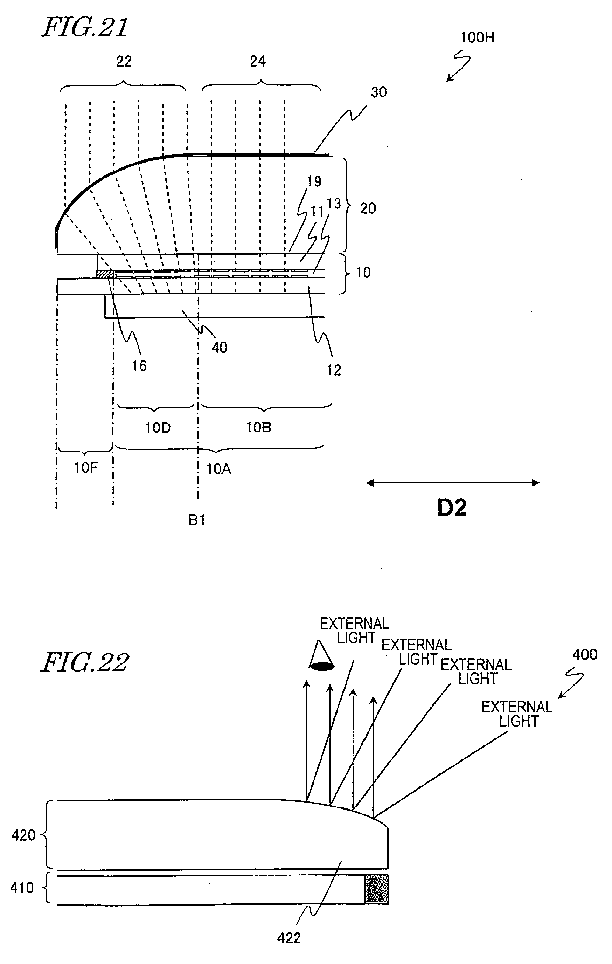

However, the present inventor conducted researches and found that the display devices described in Patent Document 1 and Patent Document 2 have a problem which will be described below. The problem will be described with reference to FIG. **22.**
FIG. **22** shows a schematic cross-sectional view of a display device **400** which includes a display panel **410** and a light-transmitting cover **420**. The light exit surface of the light-transmitting cover **420** is curved, so that external light rays coming in a lens portion **422** at different angles are reflected toward a viewer. Therefore, in the lens portion **422,** reflection of the environment frequently occurs so that the display quality is low.
The present invention was conceived for the purpose of solving the above problem. One of the objects of the present invention is to provide a display device in which the frame region of the display panel is obscured, and reflection of the environment on the lens portion is prevented.

**SOLUTION TO PROBLEM**

A direct-viewing type display device of the present invention includes: at least one display panel which has a display region and a frame region provided outside the display region, the display region and the frame region being separated by a boundary extending in a first direction; and at least one light-transmitting cover provided on a viewer side of the at least one display panel; wherein the at least one light-transmitting cover includes a lens portion which is disposed astride the boundary, the lens portion being configured to refract part of light going out from the display region in the frame region, and a light exit surface of the lens portion is a curved surface, at least part of the light exit surface being provided with an antireflection treatment.

In one embodiment, the display device further includes an antireflection film. The antireflection film is attached onto the light exit surface of the lens portion and a side surface of the lens portion via an adhesion layer. An edge of part of the antireflection film which is attached onto the side surface of the lens portion is on the side surface of the lens portion.

In one embodiment, the display device further includes an antireflection film. The antireflection film is attached onto the light exit surface of the lens portion, a side surface of the lens portion, and a rear surface of the lens portion via an adhesion layer. An edge of part of the antireflection film which is attached onto the rear surface of the lens portion is on the frame region side of the boundary.

In one embodiment, the display device further includes an antireflection film. The antireflection film is attached onto the light exit surface of the lens portion, a side surface of the lens portion, and a side surface of the at least one display panel via an adhesion layer. An edge of part of the antireflection film which is attached onto the side surface of the display panel is on the side surface of the display panel.

In one embodiment, the display device further includes an antireflection film. The antireflection film is attached onto the light exit surface of the lens portion, a side surface of the lens portion, a side surface of the at least one display panel, and a rear surface of the at least one display panel via an adhesion layer. An edge of part of the antireflection film which is on the rear surface of the display panel is on the frame region side of the boundary.

In one embodiment, a corner of the lens portion at which the light exit surface and the side surface of the lens portion meet each other has a curved surface.

In one embodiment, a corner of the lens portion at which the light exit surface and the side surface of the lens portion meet each other has a curved surface, and another corner of the lens portion at which the side surface and the rear surface of the lens portion meet each other has a curved surface.

In one embodiment, the display device further includes a protection tape which includes a support layer and a first adhesion layer provided on one surface of the support layer. The protection tape is attached so as to cover an edge of part of the antireflection film which is attached onto the side surface of lens portion and the side surface of the lens portion.

In one embodiment, the protection tape further includes a second adhesion layer provided on the other surface of the support layer. The at least one display panel includes two display panels arranged so as to adjoin each other along a second direction which is perpendicular to the first direction. The at least one light-transmitting cover includes two light-transmitting covers arranged so as to adjoin each other along the second direction. The lens portions of the two light-transmitting covers adjoin each other along the second direction. The lens portions of the two light-transmitting covers are covered with the antireflection film via an adhesion layer. The two light-transmitting covers are united together by means of the protection tape. A dimension along the second direction of the side surface of the lens portions of the two light-transmitting covers is not more than 100 μm.

A display device fabrication method of the present invention includes the steps of: (a) providing a light-transmitting cover which includes a lens portion at its edge, a light exit surface of the lens portion being formed by a curved surface; (b) attaching an antireflection film onto the light exit surface of the lens portion via an adhesion layer with pressure; and (c) after step (b), attaching the antireflection film onto a side surface of the lens portion with pressure.

In one embodiment, the display device fabrication method further includes, between step (a) and step (b) or between step (b) and step (c), step (d) of cutting the antireflection film such that an edge of part of the antireflection film attached onto the side surface is present on the side surface of the lens portion.

In one embodiment, step (a) includes providing a display panel unit, the display panel unit including a display panel and the light-transmitting cover.

In one embodiment, the antireflection film is an LR film.

In one embodiment, the antireflection film has a motheye structure.

In one embodiment, the antireflection film is a dielectric multilayer film.

In one embodiment, the display device further includes a buffer layer. The buffer layer is interposed between the rear surface of the at least one light-transmitting cover and a display surface of the at least one display panel. The refractive index of the buffer layer is equal to the refractive index of the at least one light-transmitting cover and to the refractive index of a component provided on the viewer's side of the at least one display panel.

In one embodiment, the buffer layer is made of a UV-curable resin.

Another display device of the present invention includes: at least one display panel that has a display region in which a plurality of pixels are arrayed and a frame region provided outside the display region, the display region and the frame region being separated by a boundary extending in a first direction; and at least one light-transmitting cover provided on a viewer side of the at least one display panel. The at least one light-transmitting cover includes a lens portion which is disposed astride the boundary, the lens portion being configured to refract part of light going out from the display region in the frame region. The lens portion is configured to refract light rays going out from the plurality of pixels arrayed in the display region in such a manner that the light rays occur at a generally constant pitch across a plane perpendicular to the first direction. A line of intersection between the plane perpendicular to the first direction and a light exit surface of the lens portion is a curve which is not a circular arc.

In one embodiment, the intersection line is a curve which is defined by an aspherical function.

Still another display device of the present invention includes: at least one display panel which has a display region and a frame region provided outside the display region, the display region and the frame region being separated by a boundary extending in a first direction; and at least one light-transmitting cover provided on a viewer side of the at least one display panel. The at least one light-transmitting cover includes a lens portion which is disposed astride the boundary, the lens portion being configured to refract part of light going out from the display region in the frame region. A light exit surface of the lens portion is a curved surface, and a rear surface of the lens portion is also a curved surface.

## ADVANTAGEOUS EFFECTS OF INVENTION

According to the present invention, a direct-viewing type display device is provided in which the frame region of the display panel is obscured, and reflection of the environment in the lens portion is prevented.

## BRIEF DESCRIPTION OF DRAWING

[FIG. **1**] A schematic cross-sectional view of a display device **100A** which is an embodiment of the present invention.

[FIG. **2**] **(a)** to **(d)** are schematic cross-sectional views for illustrating a method of fabricating the liquid crystal display device **100A.**

[FIG. **3**] **(a)** and **(b)** are schematic cross-sectional views for illustrating a method of fabricating the liquid crystal display device **100A.**

[FIG. **4**] A schematic cross-sectional view of a liquid crystal display device **100A'.**

[FIG. **5**] **(a)** is a schematic cross-sectional view of a liquid crystal display device **100a. (b)** is a schematic cross-sectional view of a liquid crystal display device 100b.

[FIG. **6**] **(a)** to **(c)** are schematic cross-sectional views for illustrating a method of fabricating a liquid crystal display device **100B.**

[FIG. **7**] **(a)** and **(b)** are schematic diagrams for illustrating the direction of movement of a cutting blade.

[FIG. **8**] **(a)** to **(c)** are schematic cross-sectional views for illustrating a method of fabricating the liquid crystal display device **100B.**

[FIG. **9**] A schematic cross-sectional view of the liquid crystal display device **100B.**

[FIG. **10**] **(a)** to **(c)** are schematic cross-sectional views for illustrating a method of fabricating a liquid crystal display device **100C.**

[FIG. **11**] **(a)** to **(c)** are schematic cross-sectional views for illustrating a method of fabricating the liquid crystal display device **100C.**

[FIG. **12**] A schematic cross-sectional view of a liquid crystal display device **100C.**

[FIG. **13**] A schematic cross-sectional view of a liquid crystal display device **100D.**

[FIG. **14**] A schematic cross-sectional view of a liquid crystal display device **100E.**

[FIG. **15**] A schematic cross-sectional view of a liquid crystal display device **100F.**

[FIG. **16**] A schematic cross-sectional view of a liquid crystal display device **100G.**

[FIG. **17**] A schematic cross-sectional view of a liquid crystal display device **100B'.**

[FIG. **18**] A schematic cross-sectional view of a liquid crystal display device **200A.**

[FIG. **19**] **(a)** and **(b)** are schematic diagrams for illustrating the step of binding a liquid crystal display panel **10** and a light-transmitting cover **20** together.

[FIG. **20**] A diagram showing a result of a ray-tracing simulation for a liquid crystal display device **200B.**

[FIG. **21**] An enlarged schematic cross-sectional view showing part of a liquid crystal display device **100H** in the vicinity of a lens portion **22.**

[FIG. **22**] A schematic cross-sectional view of a display device **400.**

## DESCRIPTION OF EMBODIMENTS

Hereinafter, embodiments of the present invention will be described with reference to the drawings. However, the present invention is not limited to the embodiments exemplified below.

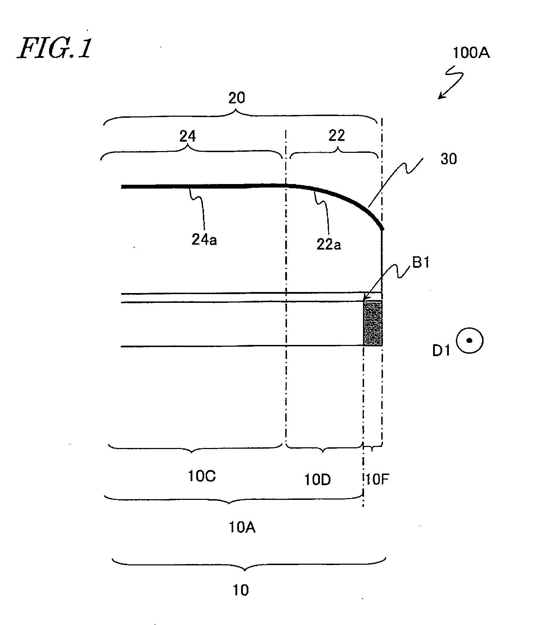

FIG. **1** shows a direct-viewing type liquid crystal display device **100A** that is an embodiment of the present invention. FIG. **1** is a schematic cross-sectional view of the liquid crystal display device **100A.**

As shown in FIG. **1,** the liquid crystal display device **100A** includes a liquid crystal display panel **10** and a light-transmitting cover **20** provided on the viewer's side of the liquid crystal display panel **10.**

The liquid crystal display panel **10** includes a display region **10A** and a frame region **10F** which is provided outside the display region **10A.** There is a boundary **B1** between the display region **10A** and the frame region **10F.** The boundary **B1** extends in a direction perpendicular to the sheet of FIG. **1.** Hereinafter, the direction in which the boundary **B1** extends is sometimes referred to as the first direction **D1.** The display region **10A** includes a central display region **10C** and a peripheral display region **10D.**

The light-transmitting cover **20** includes a lens portion **22** and a flat portion **24.** The lens portion **22** of the light-transmitting cover **20** is disposed astride the boundary **B1.** The lens portion **22** is configured to refract part of light going out from the display region **10A** in the frame region **10F.** A light exit surface **22a** of the lens portion **22** is a curved surface. The light exit surface **22a** is provided with an antireflection treatment. Light going out from the central display region **10C** enters the flat portion **24** and travels therethrough.

The peripheral display region **10D** of the liquid crystal display panel **10** refers to part of the display region **10A** in which the lens portion **22** of the light-transmitting cover **20** is provided at the viewer's side. The flat portion **24** is provided on the central display region **10C.** Light going out from the peripheral display region **10D** is refracted by the lens portion **22** such that an image formed in the peripheral display region **10D** is enlarged so as to be displayed over a region constituted of the peripheral display region **10D** and the frame region **10F.** Thus, the frame region **10F** can be visually obscured.

When the light exit surface is a curved surface, external light coming in from various angles is reflected toward a viewer, so that reflection of the environment is conspicuous, and the display quality deteriorates. In the liquid crystal display device **100A** of the present embodiment, the light exit surface **22a** of the lens portion **22** is a curved surface and is, however, provided with an antireflection treatment, so that reflection of external light is prevented, and the display quality improves.

In the liquid crystal display device **100A** of the present embodiment, the antireflection treatment provided to the light exit surface **22a** of the lens portion **22** is attaching an antireflection film **30** as shown in FIG. **1.** However, the antireflection treatment is not limited to this example. Specific examples of the antireflection treatment will be described later in detail. As in the liquid crystal display device **100A** shown in FIG. **1,** the antireflection film **30** may be attached so as to also cover a light exit surface **24a** of the flat portion **24** of the light-transmitting cover **20.** Note that, in FIG. **1,** an adhesion layer or the like for attaching the antireflection film **30** is not shown.

The liquid crystal display panel **10** may be any type of known liquid crystal display panel. Although the liquid crystal display device exemplified in the above embodiment includes a liquid crystal display panel as the display panel, the display panel used in the display device of the embodiments of the present invention is not limited to this example. Examples of the display panel include display panels for PDPs, organic EL display panels, electrophoretic display panels, etc.

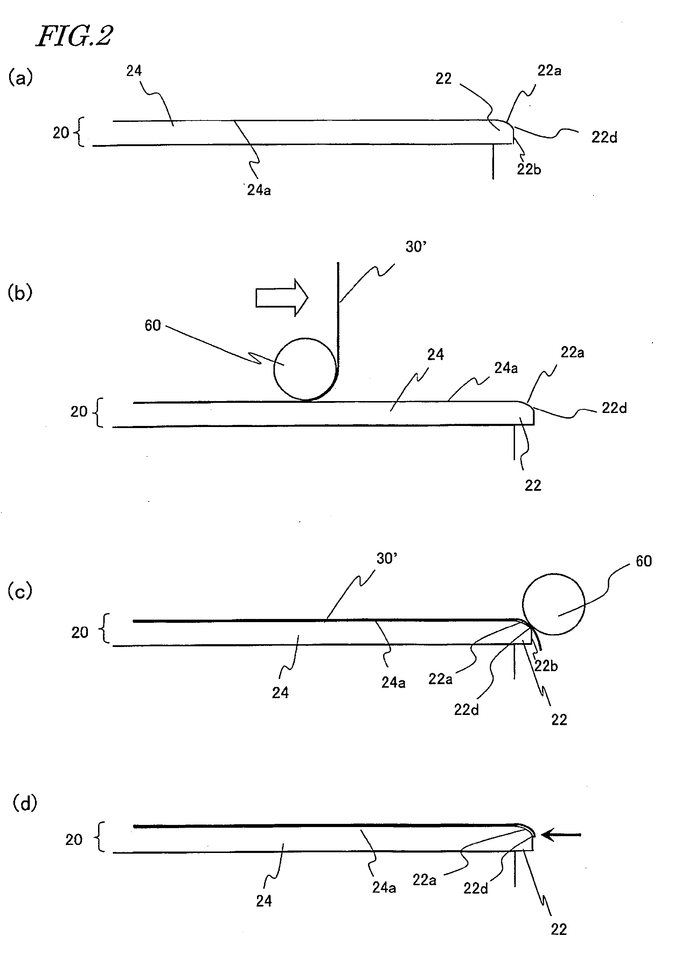

Next, a method of fabricating the liquid crystal display device **100A** shown in FIG. **1** is described with reference to FIGS. **2(a)** to **2(d).** FIGS. **2(a)** to **2(d)** are schematic cross-sectional views for illustrating the method of fabricating the liquid crystal display device **100A.**

First, as shown in FIG. **2(a),** the light-transmitting cover **20** is provided.

Then, as shown in FIG. **2(b),** an antireflection film **30'** is attached with pressure onto the light exit surface **24a** of the flat portion **24** via an adhesion layer. As shown in FIG. **2(b),** the antireflection film **30'** is attached with pressure being applied by means of a pressure application element **60** that is in the form of a roll. The adhesion layer is formed beforehand over the antireflection film **30,** and illustration thereof is omitted herein. The pressure application element **60** that is in the form of a roll is moved in the direction indicated by the arrow.

Then, as shown in FIG. **2(c),** the antireflection film **30'** is attached with pressure onto the light exit surface **22a** of the lens portion **22.**

Then, as shown in FIG. **2(d),** the antireflection film **30'** is cut off at the edge **22d** of the lens portion **22.** Here, the edge **22d** of the lens portion **22** refers to a portion where the light exit surface **22a** and the side surface **22b** intersect with each other. The cut-off position is indicated by the arrow in FIG. **2(d).**

Then, for example, the liquid crystal display panel **10** is located on the rear surface of the light-transmitting cover **20,** and these elements are combined together via an adhesive agent, whereby the liquid crystal display device **100A** shown in FIG. **1** is obtained. Specific examples of the method of combining the light-transmitting cover **20** and the liquid crystal display panel **10** together will be described later.

In the above-described example of the fabrication method, the antireflection film **30** is attached onto the light exit surface **22a** of the lens portion **22** before the light-transmitting cover **20** and the liquid crystal display panel **10** are combined together. However, for example, it may be possible that, firstly, a display panel unit which includes the liquid crystal display panel **10** and the light-transmitting cover **20** is provided, and then, an antireflection film is attached and cur off. In FIG. **2(b)**, the pressure application element **60** that is in the form of a roll is moved, whereby the antireflection film **30'** is attached onto the light-transmitting cover **20**. However, the light-transmitting cover **20** may be moved for attaching the antireflection film **30'**. In other words, the pressure application element **60** that is in the form of a roll is moved relative to the light-transmitting cover **20**, whereby the antireflection film **30'** is attached onto the light-transmitting cover **20**.

In the above-described step of cutting the antireflection film **30'**, for example, a rotary cutter is used as the cutting blade. Specific examples of the direction of the movement of the cutting blade will be described later.

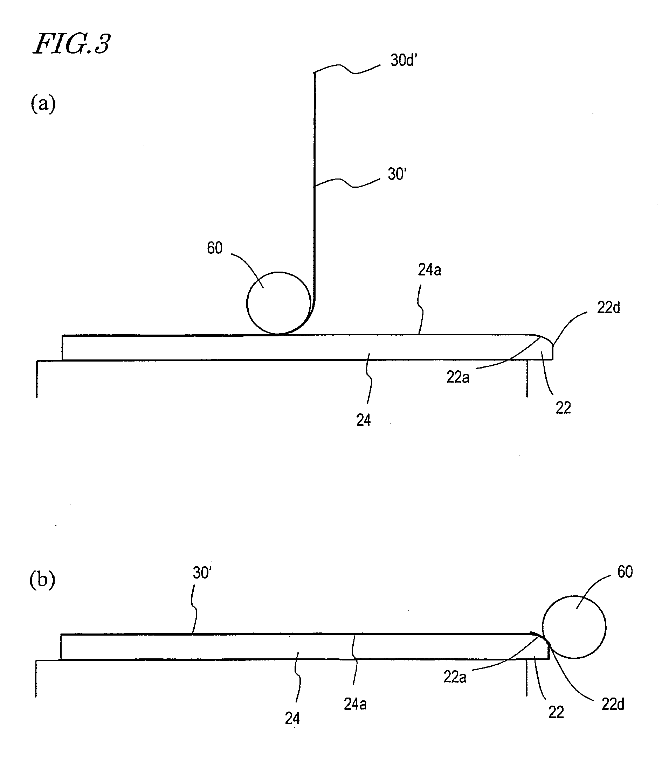

In the above-described fabrication method, the antireflection film **30'** is cut off after having been attached onto the light exit surface **22a** of the lens portion **22**. However, the antireflection film **30'** may be attached onto the light exit surface **22a** after having been cut off. In this case, the fabrication method is specifically as described below, which will be described with reference to FIGS. **3(a)** and **3(b)**.

First, the antireflection film **30'** is cut off so as to have an adjusted length such that, after having been attached, the position of the edge **30d** of the antireflection film **30** would be coincident with the edge **22d** of the lens portion **22** (the cut-off position is indicated by **30d'** in FIG. **3(a)**). The resultant antireflection film **30'** is attached with pressure onto the light exit surface **24a** of the flat portion **24** as shown in FIG. **3(a)**.

Then, as shown in FIG. **3(b)**, the antireflection film **30'** is attached with pressure onto the light exit surface **24a** of the flat portion **24** and the light exit surface **22a** of the lens portion **22**.

Then, the light-transmitting cover **20** and the liquid crystal display panel **10** are combined together in a way similar to the fabrication method previously described with reference to FIG. **2**, whereby the liquid crystal display device **100A** shown in FIG. **1** is obtained.

According to the fabrication method previously described with reference to FIG. **2**, the antireflection film **30'** is cut off at the edge **22d** of the lens portion **22**, and therefore, the edge **22d** of the lens portion **22** may sometimes have a cut scar. If the edge **22d** has a cut scar, the display quality deteriorates as described below.

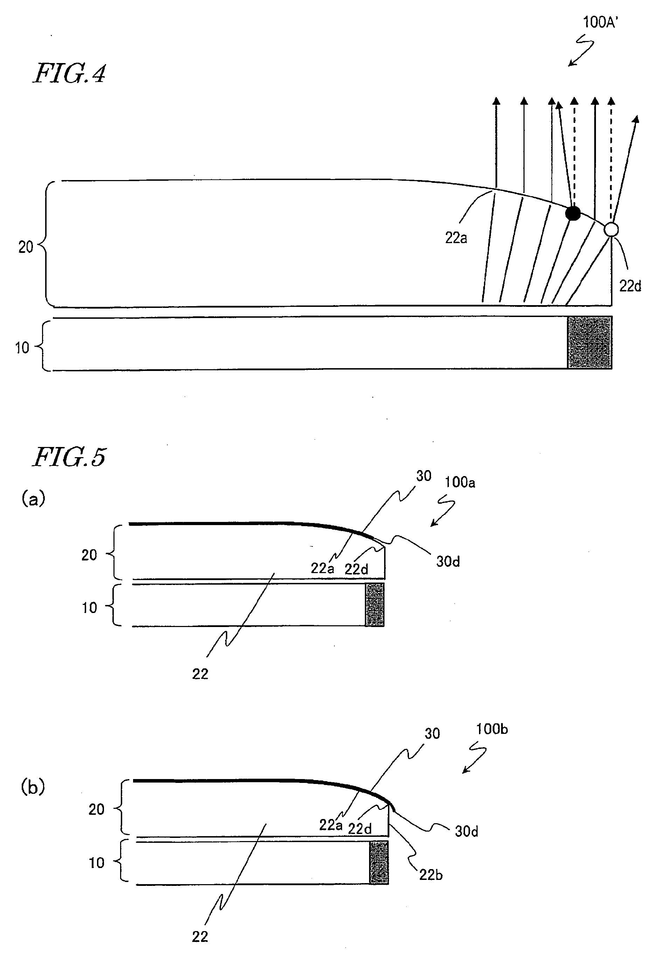

Why a cut scar leads to deterioration of the display quality is described with reference to FIG. **4**. FIG. **4** is a schematic cross-sectional view of a liquid crystal display device **100A'** which has a cut scar. In FIG. **4**, arrows represent light rays going out from the edge **22d** in the case where the edge **22d** of the lens portion (which is indicated by an open circle in FIG. **4**) has a cut scar. Although light rays going out from the lens portion **22** preferably travel straight toward a viewer in a direction perpendicular to the display surface **10a** of the display panel, a light ray going out from the edge **22d** (which is indicated by a solid-line arrow) would not be emitted in a desired direction (which is indicated by a broken-line arrow) due to irregularities caused by the cut scar as shown in FIG. **4**. Therefore, display unevenness occurs across the light exit surface **22a** of the lens portion **22**.

If the positioning accuracy of the cut-off position of the antireflection film **30'** is poor, the display quality may sometimes deteriorate as described hereinbelow. If the positioning accuracy of the cut-off position of the antireflection film **30'** is poor, the edge **30d** of the antireflection film **30** is present at an inner or outer position relative to the edge **22d** of the lens portion **22**. When the antireflection film **30'** is cut off at an inner position relative to the edge **22d** of the lens portion **22**, the light exit surface **22a** may have a cut scar. If the light exit surface **22a** of the lens portion **22** has a cut scar (the position of occurrence of the cut scar in the light exit surface **22** is indicated by a solid circle), an outgoing light ray does not travel in a desired direction, as in the case where the edge **22d** has a cut scar, so that display unevenness occurs.

Due to an external force caused by cutting of the antireflection film **30'**, part of the antireflection film **30'** may sometimes peel off from the lens portion **22**. With a peeled portion, air intervenes between the antireflection film **30** and the light exit surface **22a** so that the antireflection effect deteriorates. In the case where the antireflection film **30'** is cut off on the edge **22d** or the light exit surface **22a** of the lens portion **22**, the cut section may have a roughened surface. In this case, the antireflection effect also deteriorates.

When attaching an antireflection film which has been cut off beforehand in a way similar to the fabrication method previously described with reference to FIG. **3**, poor positioning accuracy of the cut-off position would result in that the cut-off position is at an inner or outer position relative to the edge **22d** of the lens portion **22**. If the cut-off position lies at an inner position relative to the edge **22d** of the lens portion **22**, display unevenness would sometimes occur. If the cut-off position lies at an outer position relative to the edge **22d** of the lens portion **22**, the antireflection film would readily peel off. This fact will be described hereinbelow with reference to FIGS. **5(a)** and **5(b)**.

FIG. **5(a)** is a schematic cross-sectional view of a liquid crystal display device **100a** in which the cut-off position is at an inner position relative to the edge **22d** of the lens portion **22**. When the cut-off position is at an inner position relative to the edge **22d** of the lens portion **22**, part of the light exit surface **22a** of the lens portion **22** is not provided with the antireflection film **30**. In the other part of the light exit surface **22a** of the lens portion **22** which is provided with the antireflection film **30,** reflection of external light is prevented, while the part of the light exit surface **22a** which is not provided with the antireflection film **30** readily reflects external light. Therefore, when the cut-off position is at an inner position relative to the edge **22d** of the lens portion **22,** display unevenness would occur.

FIG. **5(b)** is a schematic cross-sectional view of a liquid crystal display device **100b** in which the cut-off position is at an outer position relative to the edge **22d** of the lens portion **22.** As shown in FIG. **5(b),** in the liquid crystal display device **100b,** part of the antireflection film **30** extends beyond the edge **22d** of the lens portion **22.** When the antireflection film **30** has such a surplus part, external force is readily exerted on the surplus part of the antireflection film in the assembly step, so that the antireflection film **30** can readily peel off. Even when the surplus part of the antireflection film **30** is attached onto the side surface **22b** of the lens portion **22,** the antireflection film **30** can readily peel off due to the rigidity of the antireflection film itself because the surplus part of the antireflection film **30** is attributed to poor positioning accuracy relative to the edge **22d** of the lens portion **22,** and part of the antireflection film **30** extending over the side surface **22b** is short so that the area of the antireflection film **30** attached onto the side surface **22b** is small.

Thus, when the antireflection film **30'** is cut off beforehand in a way similar to the fabrication method previously described with reference to FIG. **3,** it is preferred that the antireflection film is cut off such that the positioning accuracy relative to the edge **22d** of the lens portion **22** improves. If the positioning accuracy is poor, an undesirable display device, such as the liquid crystal display device **100a** (FIG. **5(a)**) or the liquid crystal display device **100b** (FIG. **5(b)**), would be obtained. Therefore, the manufacturing yield is low. When the antireflection film **30'** is attached after having been cut off in a way similar to the fabrication method previously described with reference to FIG. **3,** a cut scar and peeling off of the film in the cutting step, which would occur in the fabrication method previously described with reference to FIG. **2,** would not occur. However, as described above, poor positioning accuracy disadvantageously leads to low manufacturing yield.

When the antireflection film **30'** is cut off after having been attached as previously described with reference to FIG. **4** (FIG. **2**), the positioning accuracy of the cut-off position is poor. If the antireflection film **30'** is cut off at a position on the light exit surface **22a** to produce a cut scar in the light exit surface **22a,** light would not be emitted in a desired direction due to irregularities caused by the cut scar, so that display unevenness occurs. Here, absence of the antireflection film **30** in part of the light exit surface **22a** also causes display unevenness by the same mechanism as in the liquid crystal display device **100a** (FIG. **5(a)**). In the case where the antireflection film **30'** is cut off after having been attached, if the accuracy of the cut-off position is poor so that part of the antireflection film **30** extends beyond the edge **22d** of the lens portion **22,** the antireflection film would readily peel off by the same mechanism as in the liquid crystal display device **100b** (FIG. **5(b)**). Therefore, even when the antireflection film **30'** is cut off after having been attached, the cutting is preferably performed with high positioning accuracy.

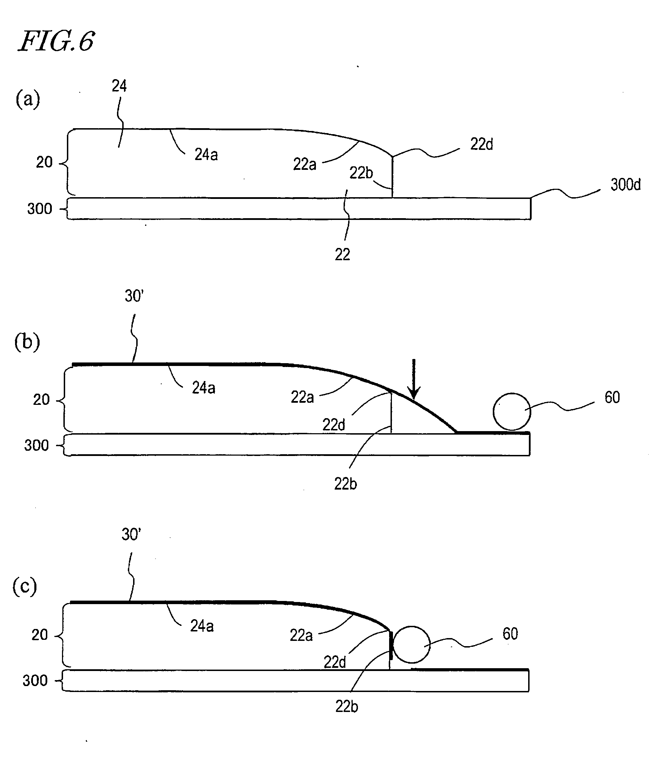

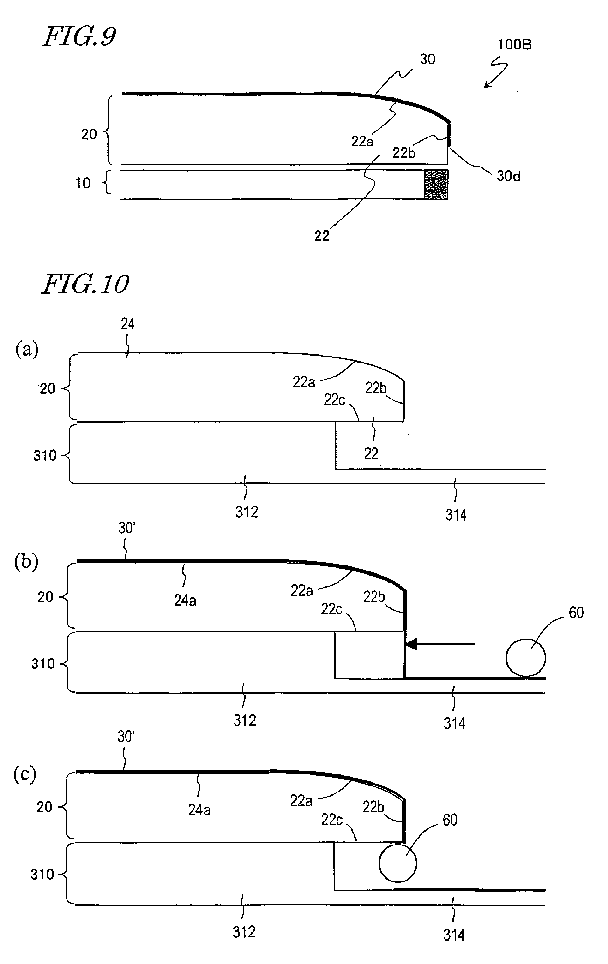

In a liquid crystal display device which is obtained according to a fabrication method which will be described below (a liquid crystal display device **100B** shown in FIG. **9,** which will be described later), an edge of the antireflection film is present on a side surface of the lens portion, and therefore, occurrence of display unevenness and peeling which have been previously described are prevented. The fabrication method of this liquid crystal display device is described hereinafter with reference to FIGS. **6(a)** to **6(c).** FIGS. **6(a)** to **6(c)** are schematic cross-sectional views for illustrating the fabrication method of the liquid crystal display device **100B** (FIG. **9**).

First, as shown in FIG. **6(a),** a supporting plate **300** and the light-transmitting cover **20** are provided. Here, the light-transmitting cover **20** is placed on the supporting plate **300** such that an edge **300d** of the supporting plate **300** is located at an outer position relative to the edge **22d** of the lens portion **22.**

Then, as shown in FIG. **6(b),** the antireflection film **30'** is attached with pressure onto the light exit surface **24a** of the flat portion **24** and the light exit surface **22a** of the lens portion **22** of the light-transmitting cover **20** and the supporting plate **300** via an adhesion layer. Here, the antireflection film **30'** is attached such that part of the attached antireflection film **30'** extending between the edge **22d** and the supporting plate **300** is not in contact with the light-transmitting cover **20** or the supporting plate **300.** Thereafter, the antireflection film **30'** is cut off at a position indicated by the arrow in FIG. **6(b)** so as to have an adjusted length such that, after having been cut off, the edge **30d** of the antireflection film **30** is on the side surface **22b** of the lens portion **22.**

Then, as shown in FIG. **6(c),** the antireflection film **30'** is attached onto the side surface **22b** of the lens portion **22** with pressure being applied by means of the pressure application element **60** that is in the form of a roll.

Then, for example, the liquid crystal display panel **10** is placed on the rear surface of the light-transmitting cover **20,** and these elements are combined together by means of an adhesive agent, whereby the liquid crystal display device **100B** shown in FIG. **9** is obtained.

In the example described above for the fabrication method, the light-transmitting cover **20** and the liquid crystal display panel **10** are combined together after the antireflection film **30** has been attached onto the light exit surface **22a** and the side surface **22b** of the lens portion **22.** For example, it may be possible that, firstly, a display panel unit which includes the liquid crystal display panel **10** and the light-transmitting cover **20** is provided, and then, an antireflection film is attached and cut off.

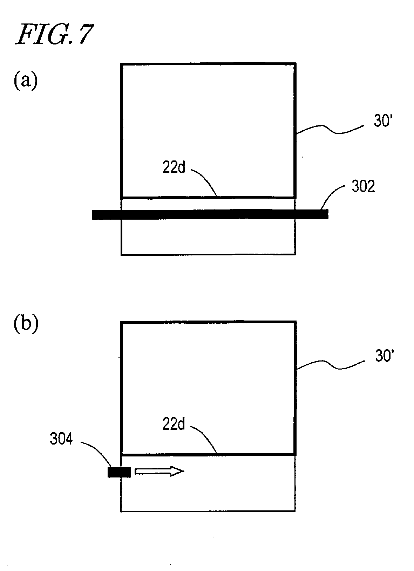

The direction of movement of the cutting blade in the cutting step which is illustrated in FIG. **6(b)** is described with reference to FIGS. **7(a)** and **7(b)**. FIGS. **7(a)** and **7(b)** are diagrams for illustrating the cutting step, which are schematic top views of the light-transmitting cover **20**. As shown in FIG. **7(a)**, when the antireflection film **30'** is cut off using a cutting blade **302** which is longer than the width of the antireflection film **30'**, the cutting blade **302** may be descended toward the supporting plate **300** (in a direction perpendicular to the sheet of FIG. **7(a)**) for cutting the antireflection film **30'**. Alternatively, for example, when a cutting blade such as the aforementioned rotary cutter or the like is used, the antireflection film **30'** may be cut off by moving the cutting blade **304** in a direction perpendicular to the longitudinal direction of the antireflection film **30'** as shown in FIG. **7(b)**. In FIG. **7(b)**, the arrow indicates the direction of movement of the cutting blade **304**.

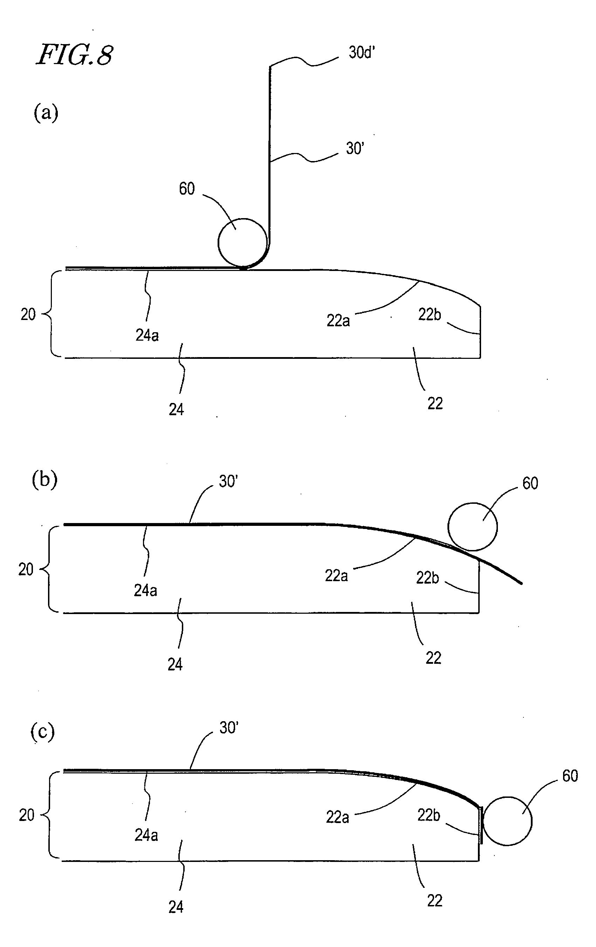

In the above-described example of the fabrication method (FIGS. **6(a)** to **6(c)**), the antireflection film **30'** is cut off after having been attached onto the lens portion **22**. However, the antireflection film **30'** may be cut off before it is attached. A fabrication method employed in this case will be described below with reference to FIGS. **8(a)** and **8(b)**.

First, the antireflection film **30'** is cut off so as to have an adjusted length such that, after having been cut off, the edge **30d** of the antireflection film **30** is on the side surface **22b** of the lens portion **22**. The cut-off position is indicated by **30d'** in FIG. **8(a)**. The resultant antireflection film **30'** is attached with pressure onto the light exit surface **24a** of the flat portion **24** as shown in FIG. **8(a)**.

Then, as shown in FIG. **8(b)**, the antireflection film **30'** is attached with pressure onto the light exit surface **24a** of the flat portion **24** and the light exit surface **22a** of the lens portion **22**.

Then, as shown in FIG. **8(c)**, the antireflection film **30'** is attached with pressure onto the side surface **22b** of the lens portion **22**.

Then, the light-transmitting cover **20** and the liquid crystal display panel **10** are combined together, whereby the liquid crystal display device **100B** (FIG. **9**) is obtained.

FIG. **9** schematically shows a cross sectional structure of the liquid crystal display device **100B** obtained according to the fabrication method which has been previously described with reference to FIG. **6** and FIG. **8**. As shown in FIG. **9**, an edge **30d** of the antireflection film **30** is on the side surface **22b** of the lens portion **22**. Here, the light exit surface **22a** is entirely covered with the antireflection film **30,** display unevenness which would occur in the liquid crystal display device **100A'** as previously described with reference to FIG. **4** does not occur. In the liquid crystal display device **100B** shown in FIG. **9,** part of the antireflection film **30** does not extend beyond the edge **22d** of the lens portion **22** as in the liquid crystal display device **100b** (FIG. **5(b)**) and therefore hardly peels off.

As previously described with reference to FIG. **5(b)**, even when the surplus part of the antireflection film **30** is attached onto the side surface **22b** of the lens portion **22,** the surplus part can readily peel off because it is short. On the other hand, as shown in FIG. **9,** when the antireflection film **30** is cut off such that the edge **30d** of the antireflection film **30** is present on the side surface **22b** of the lens portion **22,** the area of part of the antireflection film **30** which is adhered onto the side surface **22b** of the lens portion **22** is relatively large, so that the antireflection film **30** hardly peels off. The area which enables obtaining a sufficient adhesion force may be appropriately determined with consideration for the rigidity of the antireflection film **30.** Note that the adhesive agent used herein (including a pressure sensitive adhesive) preferably has an adhesion force of not less than 7 N/20 mm.

According to the fabrication method which has previously been described with reference to FIG. **6** and FIG. **8,** a cut scar and peeling off of the film in the cutting step as in the display device **100A'** (FIG. **4**) would not occur. Therefore, deterioration of the display quality due to a cut scar and peeling off of the film in the cutting step would not occur.

According to the fabrication method which has previously been described with reference to FIG. **8,** the cut-off position is adjusted such that the edge **30d** of the antireflection film **30** is present on the side surface **22b** of the lens portion **22**. In this step, the accuracy of the cut-off position may be lower than that required by the fabrication method previously described with reference to FIG. **3** in which the antireflection film is cut off such that the edge **30d** of the antireflection film **30** is coincident with the edge **22d** of the lens portion **22**.

Thus, by employing the fabrication method which has previously been described with reference to FIG. **6** and FIG. **8,** the liquid crystal display device **100B** (FIG. **9**) can be obtained in which occurrence of display unevenness and peeling off of the antireflection film **30** are prevented.

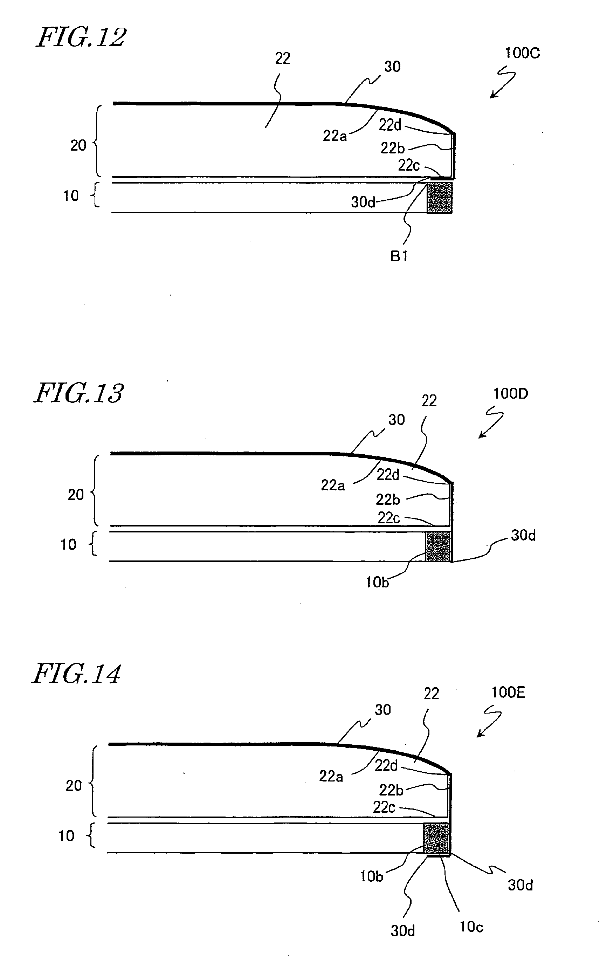

Next, a liquid crystal display device of another embodiment of the present invention (a liquid crystal display device **100C** shown in FIG. **12**) is described. A fabrication method of the liquid crystal display device **100C** is described with reference to FIGS. **10(a)** to **10(c)**. FIGS. **10(a)** to **10(c)** are schematic cross-sectional views for illustrating the fabrication method of the liquid crystal display device **100C** (FIG. **12**).

First, as shown in FIG. **10(a)**, a supporting plate **310** and the light-transmitting cover **20** are provided. As shown in FIG. **10(a)**, the supporting plate **310** includes a base portion **312** and a protruding portion **314**. The light-transmitting cover **20** is placed on the supporting plate **310** such that part of the rear surface **22c** of the lens portion **22** extends beyond the base portion **312** of the supporting plate **310** so as to be present above the protruding portion **314**.

Then, as shown in FIG. **10(b)**, the antireflection film **30'** is attached with pressure onto the light exit surface **24a** of the flat portion **24** and the light exit surface **22a** and the side surface **22b** of the lens portion **22** of the light-transmitting cover **20** and onto the protruding portion **314** of the supporting plate **310** via an adhesion layer. Thereafter, the antireflection film **30'** is cut off at a position indicated by the arrow in FIG. **10(b)** such that, after having been cut off, the edge **30d** of the antireflection film **30** is on the rear surface **22c** of the lens portion **22.**

Then, as shown in FIG. **10(c),** the antireflection film **30'** is turned up and attached onto the rear surface **22c** of the lens portion **22** with pressure being applied by means of the pressure application element **60** that is in the form of a roll.

Then, for example, the liquid crystal display panel **10** is placed on the rear surface of the light-transmitting cover **20,** and these elements are combined together by means of an adhesive agent, whereby the liquid crystal display device **100C** shown in FIG. **12** is obtained.

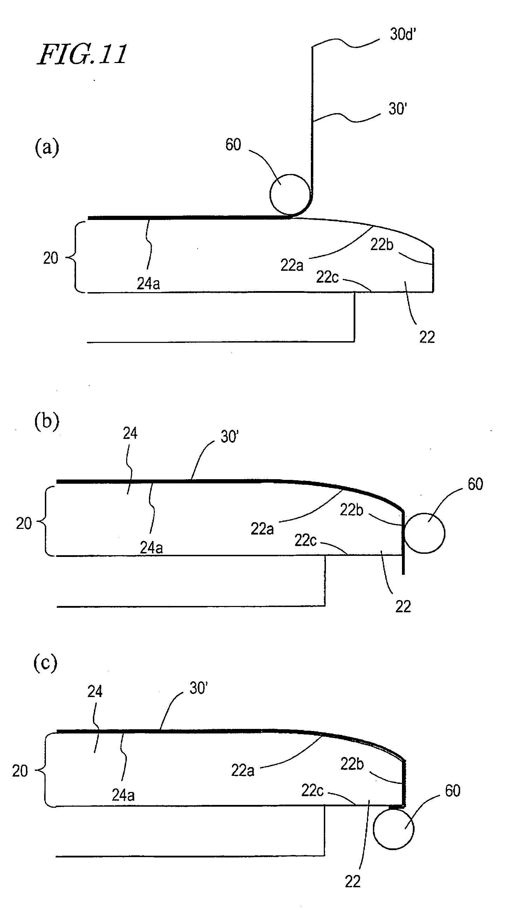

In the above-described example of the fabrication method, the antireflection film **30'** is cut off after having been attached onto the light exit surface **22a** and the side surface **22b** of the lens portion **22.** However, the antireflection film **30'** may be cut off before it is attached. A fabrication method employed in this case will be described below with reference to FIGS. **11(a)** to **11(c).**

First, the antireflection film **30'** is cut off so as to have an adjusted length such that, after having been cut off, the edge **30d** of the antireflection film **30** is on the rear surface **22c** of the lens portion **22.** The cut-off position is indicated by **30d'** in FIG. **11(a).** The resultant antireflection film **30'** is attached with pressure onto the light exit surface **24a** of the flat portion **24** as shown in FIG. **11(a).**

Then, as shown in FIG. **11(b),** the antireflection film **30'** is attached with pressure onto the light exit surface **24a** of the flat portion **24** and the light exit surface **22a** and the side surface **22b** of the lens portion **22.**

Then, as shown in FIG. **11(c),** the antireflection film **30'** is attached with pressure onto the rear surface **22c.**

Then, the light-transmitting cover **20** and the liquid crystal display panel **10** are combined together, whereby the liquid crystal display device **100C** (FIG. **12)** is obtained.

FIG. **12** schematically shows a cross sectional structure of the liquid crystal display device **100C** obtained according to the above-described fabrication method. As shown in FIG. **12,** the edge **30d** of the antireflection film **30** is on the rear surface **22c** of the lens portion **22.**

In the liquid crystal display device **100C** shown in FIG. **12,** occurrence of display unevenness and peeling off of the antireflection film **30** are prevented as in the liquid crystal display device **100B** shown in FIG. **9.** Also, in the liquid crystal display device **100C,** the antireflection film **30** is also attached on the rear surface **22c** of the lens portion **22,** and therefore, advantageously, the antireflection film **30** is more effectively prevented from peeling off as compared to the liquid crystal display device **100B.**

Since according to the display device fabrication method illustrated in FIG. **10** the antireflection film **30'** is cut off at a position different from the edge **22d** or the light exit surface **22a** of the lens portion **22** as shown in FIG. **10(a),** this method is advantageous in that peeling off and a cut scar, which may occur in the cutting step in the fabrication method illustrated in FIG. **2,** would not occur. According to the fabrication method illustrated in FIG. **11,** likewise as in the case of the fabrication method illustrated in FIG. **8,** the accuracy of the cut-off position of the antireflection film **30** may be lower than that required by the fabrication method illustrated in FIG. **3.** Note that the fabrication method illustrated in FIG. **2** is advantageous in that the step of turning up and attaching the antireflection film which have been described with reference to FIGS. **11(a)** and **11(b)** are unnecessary.

In the liquid crystal display device **100C** (FIG. **12),** it is preferred that the edge **30d** of the antireflection film **30** is on the frame region side of the boundary lying between the display region and the frame region (which is designated by **B1** in FIG. **1),** i.e., on the right side of the boundary **B1** in FIG. **12.** Because part of the antireflection film **30** extending over the rear surface **22c** of the lens portion **22** does not affect displaying.

Next, a liquid crystal display device which is another embodiment of the present invention (a liquid crystal display device **100D** shown in FIG. **13)** is described. The liquid crystal display device **100D** is obtained by cutting off the antireflection film such that, after having been cut off, the position of the edge **30d** of the antireflection film **30** is on the side surface **10b** of the liquid crystal display panel **10.** Specifically, for example, firstly, a display panel unit which includes the liquid crystal display panel **10** and the light-transmitting cover **20** is provided. Thereafter, in the same way as illustrated in FIGS. **2(a)** to **2(c)** and FIG. **11(b),** for example, the antireflection film **30'** is attached onto the light exit surface **24a** of the flat portion **24,** the light exit surface **22a** of the lens portion **22,** and the side surface **22b** of the lens portion **22.** Then, the antireflection film **30'** is attached onto the side surface **10b** of the liquid crystal display panel **10,** and the antireflection film **30'** is cut off, whereby the liquid crystal display device **100D** shown in FIG. **13** is obtained. Here, the antireflection film **30'** is cut off such that, after having been cut off, the edge **30d** of the antireflection film **30** is present on the side surface **10b** of the liquid crystal display panel **10.**

FIG. **13** schematically shows a cross sectional structure of the liquid crystal display device **100D** obtained as described above. As shown in FIG. **13,** the edge **30d** of the antireflection film **30** is on the side surface **10b** of the liquid crystal display panel **10.** In the liquid crystal display device **100D** shown in FIG. **13,** occurrence of peeling off of the antireflection film **30** and display unevenness are prevented as in the liquid crystal display device **100B** (FIG. **9)** and the liquid crystal display device **100C** (FIG. **12).** Also, the liquid crystal display device **100D** is advantageous in that occurrence of a cut scar and peeling off in the cutting step are prevented.

Next, a liquid crystal display device which is another embodiment of the present invention (a liquid crystal display device **100E** shown in FIG. **14**) is described. The liquid crystal display device **100E** is obtained by cutting off the antireflection film such that, after having been cut off, the position of the edge **30d** of the antireflection film **30** is on the rear surface **10c** of the liquid crystal display panel **10**. Specifically, for example, firstly, a display panel unit which includes the liquid crystal display panel **10** and the light-transmitting cover **20** is provided. Thereafter, in the same way as illustrated in FIGS. **2(a)** to **2(c)** and FIG. **11(b),** for example, the antireflection film **30'** is attached onto the light exit surface **24a** of the flat portion **24,** the light exit surface **22a** of the lens portion **22,** and the side surface **22b** of the lens portion **22.** Then, the antireflection film **30'** is attached onto the side surface **10b** of the liquid crystal display panel **10,** and the antireflection film **30'** is attached onto the rear surface **10c** of the liquid crystal display panel **10.** Thereafter, the antireflection film **30'** is cut off, whereby the liquid crystal display device **100E** shown in FIG. **14** is obtained. Here, the antireflection film **30'** is cut off so as to have an adjusted length such that, after having been cut off, the edge **30d** of the antireflection film **30** is present on the rear surface **10c** of the liquid crystal display panel **10.**

FIG. **14** schematically shows a cross sectional structure of the liquid crystal display device **100E** obtained as described above. As shown in FIG. **14,** the edge **30d** of the antireflection film **30** is on the rear surface **10c** of the liquid crystal display panel **10.** In the liquid crystal display device **100E** shown in FIG. **14,** occurrence of peeling off of the antireflection film **30** and display unevenness are prevented as in the liquid crystal display device **100B** (FIG. **9**), the liquid crystal display device **100C** (FIG. **12**), and the liquid crystal display device **100D** (FIG. **13**). Also, the liquid crystal display device **100E** is advantageous in that occurrence of a cut scar and peeling off in the cutting step are prevented.

In the above-described liquid crystal display device **100D** (FIG. **13**), the antireflection film **30'** may be cut off before being attached, so as to have an adjusted length such that, after having been attached, the edge **30d** of the antireflection film **30** is on the side surface **10b** of the liquid crystal display panel **10,** rather than cutting off the antireflection film **30'** after having been attached onto the light exit surface **22a** of the lens portion **22,** the side surface **22b** of the lens portion **22,** and the side surface **10b** of the liquid crystal display panel **10.** This example is preferred because a cut scar is not formed in the side surface **10b** of the liquid crystal display panel **10.** This also applies to the liquid crystal display device **100E** (FIG. **14**). If the antireflection film **30'** is cut off beforehand so as to have an adjusted length such that, after having been attached, the edge **30d** of the antireflection film **30** is on the rear surface **10c** of the liquid crystal display panel **10,** a cut scar would not formed in the rear surface **10c.** Note that, a cut scar formed in the side surface **10b** of the rear surface **10c** of the liquid crystal display panel **10** can be a cause of a crack in the liquid crystal display panel **10.**

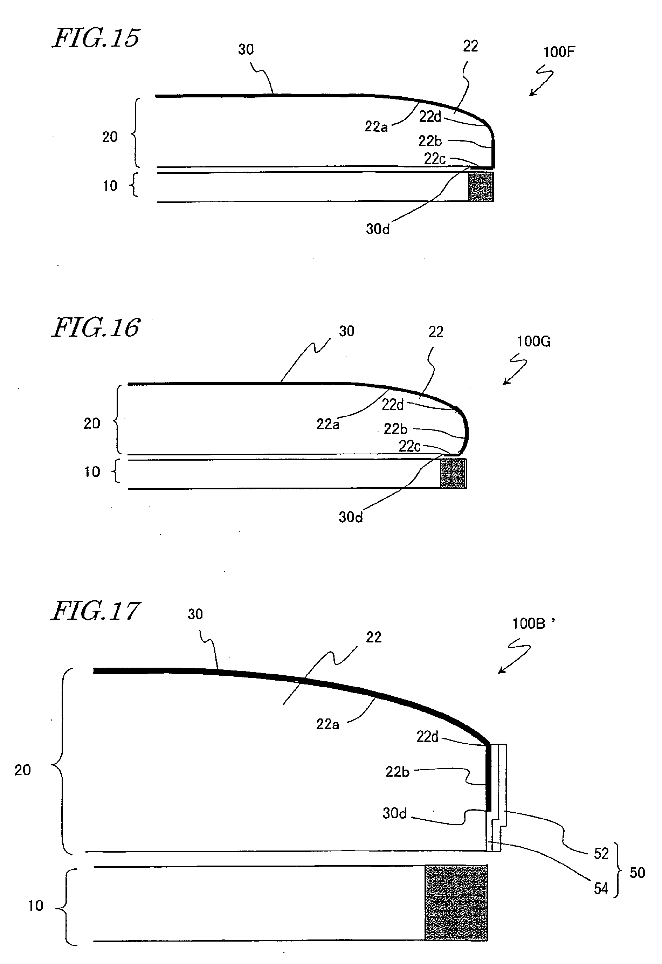

When the antireflection film **30** is attached onto the light exit surface **22a** and the side surface **22b** of the lens portion **22** as in the liquid crystal display devices **100B** (FIG. **9**), **100C** (FIG. **12**), **100D** (FIG. **13**) and **100E** (FIG. **14**), a corner of the lens portion **22** at which the light exit surface **22a** and the side surface **22b** meet each other (i.e., in the vicinity of the edge **22d** of the lens portion **22**) may have a curved surface (FIG. **15**). In the liquid crystal display device **100F** shown in FIG. **15,** the edge **30d** of the antireflection film **30** is on the rear surface **22c** of the lens portion **22.** A corner of the liquid crystal display device **100F** at which the light exit surface **22a** and the side surface **22b** of the lens portion **22** meet each other has a curved surface. When the surface is formed by a curved surface in the vicinity of the edge **22d** of the lens portion **22,** the antireflection film **30** is more effectively prevented from peeling off.

When the antireflection film **30** is attached onto the rear surface **22c** of the lens portion **22** as in the liquid crystal display device **100C** shown in FIG. **12,** it is more preferred that the corner at which the side surface **22b** and the rear surface **22c** of the lens portion **22** meet each other is formed by a curved surface. FIG. **16** shows a schematic cross-sectional view of a liquid crystal display device **100G** which has such a configuration. In the liquid crystal display device **100G** shown in FIG. **16,** the edge **30d** of the antireflection film **30** is on the rear surface **22c** of the lens portion **22.** A corner of the liquid crystal display device **100G** at which the light exit surface **22a** and the side surface **22b** of the lens portion **22** meet each other has a curved surface, and another corner of the liquid crystal display device **100G** at which the side surface **22b** and the rear surface **22c** of the lens portion **22** meet each other also has a curved surface. When the corner at which the side surface **22b** and the rear surface **22c** of the lens portion **22** meet each other also has a curved surface, the antireflection film **30** is more effectively prevented from peeling off.

A liquid crystal display device in which the edge **30d** of the antireflection film **30** is on the side surface **22b** of the lens portion **22** as in the liquid crystal display device **100B** shown in FIG. **9** may further include a protection tape **50.** The protection tape **50** includes a support layer **52** and an adhesion layer **54** which is provided on one surface of the support layer **52.** The protection tape **50** may be attached so as to cover the edge **30d** **and** the side surface **22b** of the lens portion **22** (FIG. **17**). In the liquid crystal display device **100B'** shown in FIG. **17,** the protection tape **50** is attached so as to cover the edge **30d** of the antireflection film **30** and the side surface **22b** of the lens portion **22.** The liquid crystal display device **100B'** shown in FIG. **17** is advantageous in that the antireflection film **30** is prevented from peeling off.

In the above example, the protection tape **50** is provided in the liquid crystal display device **100B'** where the edge **30d** of the antireflection film **30** is on the side surface **22b** of the lens portion **22** (FIG. **17**). However, in a liquid crystal display device where the edge **30d** of the antireflection film **30** is on the rear surface **22c** of the lens portion **22** as in the liquid crystal display device **100C** shown in FIG. **12,** the edge **30d** may be attached onto the side surface **22b** and/or the rear surface **22c** of the lens portion **22** by means of the protection tape **50.** By attaching the protection tape **50,** the antireflection film **30** is more effectively prevented from peeling off.

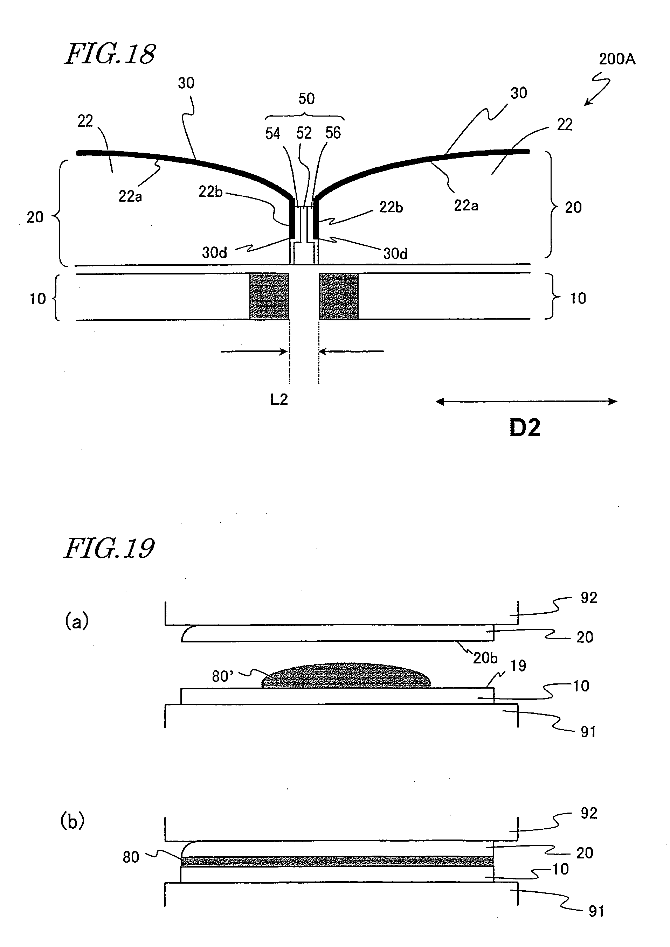

Next, a liquid crystal display device **200A** which has a large screen formed by the liquid crystal display panels **10** using a tiling technique is described with reference to FIG. **18.** The liquid crystal display device **200A** shown in FIG. **18** includes two liquid crystal display panels **10** and two light-transmitting covers **20.** FIG. **18** is a schematic enlarged cross-sectional view showing a joint portion of the two liquid crystal display panels **10** of the liquid crystal display device **200A.** Note that the tiling may be realized according to a known method.

The two liquid crystal display panels **10** are arranged so as to adjoin each other along the second direction **D2** (the horizontal direction in FIG. **18**). Here, the second direction **D2** is perpendicular to the first direction **D1** (see FIG. **1**). The viewer's side of each of the liquid crystal display panels **10** is provided with the light-transmitting cover **20.** As shown in FIG. **18,** the light exit surface **22a** and the side surface **22b** of the lens portion **22** of the light-transmitting cover **20** is covered with the antireflection film **30.** The two light-transmitting covers **20** are arranged such that the lens portions **22** adjoin each other along the second direction **D2.** The edge **30d** of the antireflection film **30** is on the side surface **22b** of the lens portion **22.**

The liquid crystal display device **200A** includes a protection tape **50.** The protection tape **50** includes a support layer **52** and two adhesion layers (the first adhesion layer **54** and the second adhesion layer **56**). That is, the protection tape **50** is a double-sided tape. The first adhesion layer **54** is provided on one side of the support layer **52.** The second adhesion layer **56** is provided on the other side of the support layer **52.**

As shown in FIG. **18,** the protection tape **50** unites the two light-transmitting covers **20** together at the side surfaces **22b.** The edges **30d** of the antireflection films **30** and the side surfaces **22b** of the lens portions **22** which have been attached onto the respective light-transmitting covers **20** are covered with the protection tape **50.** By using the protection tape **50** which has the adhesion layers on both sides, the antireflection films **30** is prevented from peeling off, as in the liquid crystal display device **100B'** shown in FIG. **17,** even when the liquid crystal display panels **10** are used for tiling. Thus, the protection tape **50** advantageously has two functions, combining the two light-transmitting covers **20** together and preventing the antireflection films **30** from peeling off.

In the liquid crystal display device **200A,** portions of the protection tape **50** and the antireflection films **30** extending over the side surfaces **22b** of the lens portions **22** constitute part of the non-display region that does not contribute to displaying. Therefore, the protection tape **50** is preferably as thin as possible. For example, the protection tape **50** is preferably attached such that the distance **L2** along the second direction **D2** between the side surfaces **22b** of the lens portions **22** of the respective light-transmitting covers **20** is not more than 100 $\mu$m.

In a liquid crystal display device in which the liquid crystal display panels **10** are used for tiling, such as the liquid crystal display device **200A** shown in FIG. **18,** the antireflection films **30** may be attached such that the edges **30d** of the antireflection films **30** are present on the rear surfaces **22c** of the lens portions **22,** while the two light-transmitting covers **20** are united together at the side surfaces **22b** by the protection tape **50.** In this case, the non-display region is also preferably not more than 100 $\mu$m. Further, in this case, the edges **30d** of the antireflection films **30** may be attached onto the side surfaces **22b** and/or rear surfaces **22c** of the lens portion **22** using the protection tape **50.**

The liquid crystal display panel **10** and the light-transmitting cover **20** may be combined according to a known method. For example, as shown in FIGS. **19(a)** and **19(b),** the liquid crystal display panel **10** and the light-transmitting cover **20** may be combined together via a buffer layer **80.** The refractive index of the buffer layer **80** is preferably close to the refractive index of the light-transmitting cover **20** and the refractive index of a component which is provided on the viewer's side of the liquid crystal display panel **10** (e.g., the upper substrate) because the interface reflection can be prevented, and the display quality can be improved. In the case where the liquid crystal display device includes a backlight device, the transmittance of light emitted from the backlight device can be improved. Therefore, improvement in luminance of the display device and reduction in power consumption can advantageously be realized.

An example where a UV-curable resin is used as the material for the buffer layer **80** is now described with reference to FIGS. **19(a)** and **19(b).** FIGS. **19(a)** and **19(b)** are schematic cross-sectional views for illustrating the step of combining the liquid crystal display panel **10** and the light-transmitting cover **20** together.

As shown in FIG. **19(a),** the liquid crystal display panel **10** is supported on a flat stage **91.** A UV-curable resin **80'** of an appropriate amount is applied onto the display surface **19** of the liquid crystal display panel **10.** Meanwhile, the light-transmitting cover **20** is supported on a flat stage **92** such that the rear surface **20b** of the light-transmitting cover **20** opposes the display surface **19** of the liquid crystal display panel **10.** The UV-curable resin **80'** may be, for example, dropped onto the display surface **19** of the liquid crystal display panel **10.**

Then, as shown in FIG. **19(b),** the liquid crystal display panel **10** is moved in a direction perpendicular to the display surface **19** relative to the light-transmitting cover **20,** thereby combining the liquid crystal display panel **10** and the light-transmitting cover **20** together. The step of combining is preferably performed in a reduced pressure atmosphere such that air bubbles are not contained in the UV-curable resin **80'.** Here, the reduced pressure atmosphere is preferably in the range of, for example, from $1.5 \times 10^{-4}$ MPa to $3.0 \times 10^{-3}$ MPa.

Then, the UV-curable resin **80'** is irradiated with ultraviolet light so as to be cured.

In this way, the liquid crystal display panel **10** and the light-transmitting cover **20** can be combined together via the buffer layer **80.** Note that, after irradiation with ultraviolet light, the UV-curable resin **80'** may be heated so that the curing may be accelerated.

The element used for combining the liquid crystal display panel **10** and the light-transmitting cover **20** together may be an adhesive material which is in the form of a sheet, such as a pressure sensitive adhesive sheet, a gel sheet, or the like. When the sheet element is used to combine the display panel and the light-transmitting cover together, the sheet element is placed over the display surface **19** of the liquid crystal display panel **10** supported on the flat stage **91** with pressure being applied by means of a pressure application element, such as a roller. Then, the light-transmitting cover **20** supported on the flat stage **92,** for example, is combined with the liquid crystal display panel **10.** The step of combining the liquid crystal display panel **10** and the light-transmitting cover **20** together is preferably performed in a reduced pressure atmosphere for the same reason as that described above. In this way, the liquid crystal display panel **10** and the light-transmitting cover **20** can be combined together. By using an adhesive sheet element, even if the combination fails due to entry of air bubbles or external materials in the manufacture process, reworking is readily enabled so that the manufacturing yield can be improved.

The antireflection film may be a know antireflection film.

The antireflection film may be a coat-type low reflection film (LR film). The coat-type low reflection film is formed by coating a base with a resin material of a low refractive index such that the coat has a predetermined thickness. By providing a coat-type low reflection film, the reflectance can be decreased to about 1%.

Alternatively, an antireflection film which is formed by a dielectric multilayer film (also referred to as "AR film") may be used. The dielectric multilayer film is obtained by, for example, stacking layers of two or more inorganic dielectric materials having different refractive indices over a film of PET, or the like, by means of vapor deposition, or the like, such that the respective layers have predetermined thicknesses. The dielectric multilayer film enables reducing the reflectance to about 0.2% due to an interference effect.

The antireflection film may have a motheye structure. An antireflection film which has a motheye structure may be fabricated, for example, as described below.

An aluminum base is provided, and an anodization step and an etching step are repeated, whereby a stamper is fabricated which has a structure of recessed and raised portions in its surface. Then, the stamper is pressed on a PET film which is, for example, coated with an UV-curable resin (e.g., urethane acrylate resin) over its surface, and the resin is irradiated with ultraviolet light (for example, irradiated with ultraviolet light at the wavelength of 365 nm, with the intensity of 10 mW, for 360 seconds). As a result, a resin antireflection film is obtained, which has a structure of recessed and raised portions such that the two-dimensional size and the interval of the recessed and raised portions, when seen in a direction normal to the surface, are not less than 10 nm and less than 500 nm. The antireflection film which has the motheye structure enables reducing the reflectance to about 0.2% (see WO 2006/059686 and WO 2009/019839). Note that the entire disclosures of WO 2006/059686 and WO 2009/019839 are incorporated by reference in this specification.

As for the display quality of the display devices which include the antireflection films, the display device which includes the coat-type low reflection film has better display quality than the display device which includes the dielectric multilayer film, and the display device which includes the dielectric multilayer film has better display quality than the display device which includes the motheye structure antireflection film. This difference in display quality is attributed to the difference in reflectance among the three types of antireflection films.

Among the coat-type low reflection film, the dielectric multilayer antireflection film, and the motheye structure antireflection film, the coat-type low reflection film and the motheye structure antireflection film are relatively flexible and therefore advantageous when being attached onto a curved surface as in the above-described display device embodiments.

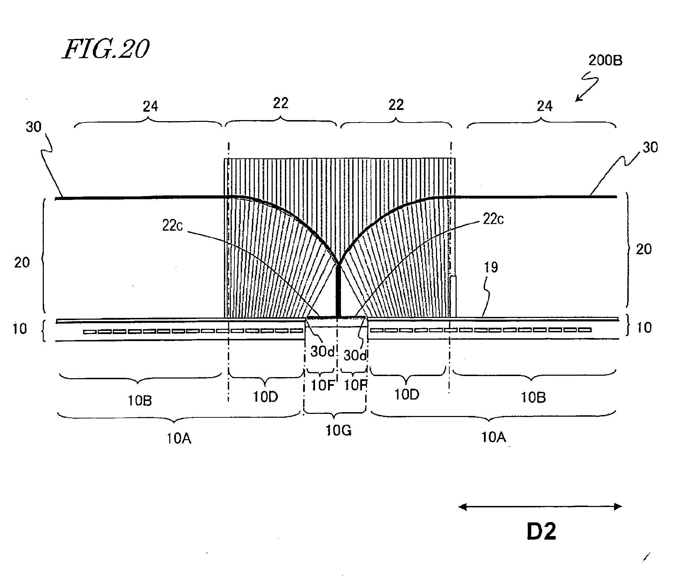

Here, the result of a ray-tracing simulation for a liquid crystal display device of the present embodiment is described with reference to FIG. **20.** FIG. **20** shows the result of a ray-tracing simulation for the liquid crystal display device **200B** in which the two liquid crystal display panels **10** are arranged along the second direction **D2,** the simulation being performed in the vicinity of the joint portion between the two liquid crystal display panels **10.**

The liquid crystal display device **200B** includes two liquid crystal display panels **10** and two light-transmitting covers **20.** The two liquid crystal display panels **10** are arranged so as to adjoin each other along the second direction **D2.** Here, the second direction **D2** is perpendicular to the first direction **D1** (see FIG. **1**). The light-transmitting covers **20** are provided on the viewer's side of the respective liquid crystal display panels **10.** As shown in FIG. **20,** the antireflection film **30** is attached onto the light exit surface, the side surface and the rear surface **22c** of the lens portion **22** of the light-transmitting cover **20.** The edge **30d** of the antireflection film **30** is on the rear surface **22c** of the lens portion **22.** The two light-transmitting covers **20** are arranged such that the lens portions **22** adjoin each other along the second direction **D2.**

As shown in FIG. **20,** light rays going out from the pixels arrayed in the peripheral display regions **10D** enter the lens portions **22** and then are refracted to go toward the viewer, traveling in a direction perpendicular to the display surface **19.** Thus, an image formed in the peripheral display regions **10D** is enlarged so as to be displayed over a region constituted of the peripheral display regions **10D** and the frame regions **10F.** Therefore, the frame regions **10F** are obscured.

The frame regions **10F** of the two liquid crystal display panels **10** constitute a non-display region **10G.** In the liquid crystal display device **200B,** the frame regions **10F** of the two liquid crystal display panels **10** are obscured. When seen in a direction perpendicular to the display surface **19,** the non-display region **10G** is obscured. Moreover, since the lens portions **22** are provided with the antireflection films **30,** reflection of external light is prevented, so that the display quality is high.

Thus, by attaching the antireflection film onto the light exit surface and the side surface of the lens portion, or by attaching antireflection film onto the light exit surface, the side surface and the rear surface of the lens portion, the antireflection film is prevented from peeling off, and the display quality is improved. When a plurality of display panels are combined together using a tiling technique (in the case of a so-called multi display or seamless display), the combined panels are recognized as a single display device, without a sense of discontinuity, so that the display quality improves.

The light-transmitting cover may be manufactured using, for example, an acrylic material by cutting or injection molding. The material for the light-transmitting cover may be, for example, a transparent resin, such as polycarbonate, or a light-transmitting material, such as glass.

In the above examples, the antireflection film is attached via an adhesion layer. The material for the adhesion layer may be a pressure sensitive adhesive. When the pressure sensitive adhesive is used, as in the case of an adhesive agent for use in combining together the liquid crystal display panel and the light-transmitting cover which have been described above, even if the combination fails due to entry of air bubbles or external materials in the manufacture process, reworking is readily enabled so that the manufacturing yield can be improved.

Next, the shape of the light exit surface of the lens portion is described. The line of intersection between the light exit surface of the lens portion and a plane perpendicular to the boundary (the boundary between the display region and the frame region, which is designated by **B1** in FIG. **1**) may be, for example, a circular arc. Alternatively, a line of intersection between the light exit surface **22a** and a plane perpendicular to the boundary **B1** may be a curve which is not a circular arc. For example, it may be a curve which is defined by an aspherical function. Particularly, it is preferred that the line of intersection is a curve defined by an aspherical function described in WO 2009/157150. The entire disclosure of WO 2009/157150 is incorporated by reference in this specification.

A liquid crystal display device **100H** is described with reference to FIG. **21,** in which a line of intersection between the light exit surface **22a** and a plane perpendicular to the boundary **B1** is a curve defined by an aspherical function described in WO 2009/157150.

FIG. **21** is a schematic enlarged cross-sectional view of part of the liquid crystal display device **100H** in the vicinity of the lens portion **22.** As shown in FIG. **21,** the liquid crystal display device **100H** includes the liquid crystal display panel **10** and the light-transmitting cover **20.** The light-transmitting cover **20** includes the lens portion **22** and the flat portion **24.** The light exit surface **22a** and the side surface **22b** of the lens portion **22** are covered with the antireflection film **30.**

In FIG. **21,** broken lines represent light rays which go out from the pixels arrayed in the display region **10A.** As shown in FIG. **21,** light rays going out from the pixels arrayed in the peripheral display region **10D** enter the lens portion **22** and are refracted in the frame region **10F.**

For example, the shape of the viewer-side surface **22a** of the lens portion **22** can be obtained as described below which is configured such that an image that has been formed in the peripheral display region **10D** at an image compression rate a relative to an image formed in the central display region **10B** is enlarged by 1/a times so as to be displayed over the viewer-side surface **22a** of the lens portion **22.**

The aspherical function f(x) used herein is as follows:

$$f(x) = h - cx^2 / (1 + (1 - (1+k)c^2x^2)^{1/2}) + A_4x^4 + A_6x^6 + A_8x^8 + A_{10}x^{10}$$

where

  *c*: curvature of the lens portion **22** (an inverse of the radius of curvature),
  *h*: thickness of the flat portion **24,** and
  *k*: conic constant.
  *x* represents the position of each point on the viewer-side surface **22a** of the lens portion **22** along the second direction D2. Zero (0) is set on the central display region **10C** side. The value increases as the position becomes closer to the frame region **10F.**

Assuming that, for example:

  width L1 of the peripheral display region **10D:** 12 mm;

width L2 of the frame region **10F:** 3 mm;
image compression rate a: 0.8
thickness $h$ of the flat portion **24:** 13 mm;
radius of curvature (an inverse of the curvature c of the lens portion **22,** i.e., 1/$c$): 23 mm; and
refractive index n of the lens portion **22:** 1.49 (acrylic resin),

the coefficients of the function have the following values.

$$k=1.15$$

$$A_4=-7.86\times10^{-7}$$

$$A_6=1.89\times10^{-8}$$

$$A_8=-1.62\times10^{-10}$$

$$A_{10}=4.95\times10^{-13}$$

The value of $k$ is expressed by the following formula when $a$=0.4 to 0.89:

$$k=89.918a^4-194.57a^3+159.82a^2-57.099a+7.1865$$

When the image compression rate is small (e.g., $a$<0.7), the value of 1/$a$ is large, so that each pixel is greatly enlarged. This can make the black matrix between adjacent pixels conspicuous, resulting in undesirable display in many cases. On the other hand, a large image compression rate (e.g., $a$>0.9) is not so preferred because a large lens portion is necessary as compared with the width of the frame region. For example, when the image compression rate $a$ is 0.95, $a$=L1/(L1+L2)=0.95. Thus, the width of the lens portion, L1+L2, is 20 times the width L2 of the frame region. If the width L2 of the frame region is 3 mm as in the above example, the width of the lens portion, L1+L2, is 60 mm. For example, many of the display devices for use in mobile phones have the device width of not more than 60 mm, and therefore, a lens element whose lens portion width L1+L2 is 60 mm cannot be placed. Therefore, the image compression rate $a$ is preferably about 0.7 to 0.9. Based on the above formula, the values of conic constant $k$ for the image compression rate $a$=0.7, 0.9 are calculated to be $k$≈0.38, 2.4, respectively. Thus, the preferred range of conic constant $k$ is not less than 0.38 and not more than 2.4.

The above aspherical function $f(x)$ is obtained using the above value of $k$, and the lens portion **22** which has the light exit surface **22a** represented by $f(x)$ is manufactured, whereby an undistorted image can be displayed in the peripheral display region **10D** and the frame region **10F.**

When a cross section of the light exit surface **22a** of the lens portion **22** is a curve which is defined by the above aspherical function, the light rays going out from the light exit surface **22a** of the lens portion **22** toward the viewer occur at an equal interval along the second direction **D2** as shown in FIG. 21. In other words, when a cross section of the light exit surface **22a** of the lens portion **22** is a curve which is defined by the above aspherical function, the lens portion **22** refracts light rays going out from a plurality of pixels arrayed in the peripheral display region **10D** of the display region **10A** in such a manner that the light rays occur at a generally constant pitch along the second direction **D2** (i.e., at a generally constant pitch across a plane perpendicular to the first direction **D1**). Therefore, the liquid crystal display device **100H** is capable of displaying an undistorted image over a region constituted of the peripheral display region **10D** and the frame region **10F.**

14

The liquid crystal display panel **10** may be any type of known liquid crystal display panel. The liquid crystal display panel **10** includes an upper substrate **11** and a lower substrate **12,** and further includes a liquid crystal layer **13** between the upper substrate **11** and the lower substrate **12**. The lower substrate **12** has, for example, TFTs and pixel electrodes. The upper substrate **11** has, for example, a color filter layer and a counter electrode. The upper side of the upper substrate **11** and the lower side of the lower substrate **12** are provided with polarizers as necessary. The frame region **10F** of the liquid crystal display panel **10** includes a sealing portion **16,** a driving circuit, etc. Under the liquid crystal display panel **10**, a backlight device **40** is provided. The backlight device **40** is, for example, a direct lighting type backlight device which includes a plurality of fluorescent tubes that are parallel to one another.

In either of the above-described liquid crystal display devices **100A** (FIG. **1**), **100B** (FIG. **9**), **100C** (FIG. **12**), **100D** (FIG. **13**), **100E** (FIG. **14**), **100F** (FIG. **15**), **100G** (FIG. **16**), **100H** (FIG. **21**), **200A** (FIG. **18**) and **200B** (FIG. **20**), only the light exit surface **22a** of the lens portion **22** is formed by a curved surface. However, both the light exit surface and the rear surface of the lens portion may be formed by curved surfaces. When the both surfaces of the lens portion are formed by curved surfaces, light coming in the lens portion is refracted twice before going out from the lens portion. Therefore, as compared to a case where only one side is formed by a curved surface, light can be largely refracted within a short optical distance. Thus, even when the radii of curvature of the light exit surface **22a** and the rear surface **22c** of the lens portion **22** are greater than that of a display device in which only one side of the lens portion is formed by a curved surface, equivalent optical characteristics can be achieved. As the radius of curvature increases, the thickness of the lens portion can be decreased. Therefore, when the light exit surface **22a** and the rear surface **22c** of the lens portion **22** are formed by curved surfaces, the thickness and the weight of the lens portion **22** can advantageously be reduced.

When both surfaces of the lens portion are curved surfaces, both a line of intersection between the light exit surface and a plane which is perpendicular to the boundary (the boundary between the display region and the frame region, which is designated by **B1** in FIG. **1**) and a line of intersection between the rear surface and a plane which is perpendicular to the boundary are, for example, circular arcs. Alternatively, at least one of these intersection lines may be a curve which is defined by an aspherical function. Alternatively, at least one of the light exit surface and the rear surface may be another free curved surface (see WO 2009/157161). The entire disclosure of WO 2009/157161 is incorporated by reference in this specification.

As described above, according to the present invention, a direct-viewing type display device can be provided in which the frame region of a display panel is obscured and in which reflection of the environment in the lens portion is prevented.

## INDUSTRIAL APPLICABILITY

The present invention is suitably applicable to display devices for television sets and display devices for displaying information.

## REFERENCE SIGNS LIST

| | |
|---|---|
| **10** | liquid crystal display panel |
| **10A** | display region |
| **10C** | central display region |
| **10D** | peripheral display region |
| **10F** | frame region |
| **19** | display surface of display panel |
| **20** | light-transmitting cover |
| **22** | lens portion |
| **22a** | light exit surface |
| **22b** | side surface |
| **22c** | rear surface |
| **24** | flat portion |
| **30** | antireflection film |
| **100A** | liquid crystal display device |
| **B1** | boundary |
| **D1** | first direction |

**Claims**

1.  A direct-viewing type display device, comprising:

    at least one display panel which has a display region and a frame region provided outside the display region, the display region and the frame region being separated by a boundary extending in a first direction; and
    at least one light-transmitting cover provided on a viewer side of the at least one display panel;
    wherein the at least one light-transmitting cover includes a lens portion which is disposed astride the boundary, the lens portion being configured to refract part of light going out from the display region in the frame region, and a light exit surface of the lens portion is a curved surface, at least part of the light exit surface being provided with an antireflection treatment.

2.  The display device of claim 1, further comprising an antireflection film, wherein
    the antireflection film is attached onto the light exit surface of the lens portion and a side surface of the lens portion via an adhesion layer, and
    an edge of part of the antireflection film which is attached onto the side surface of the lens portion is on the side surface of the lens portion.

3.  The display device of claim 1, further comprising an antireflection film, wherein
    the antireflection film is attached onto the light exit surface of the lens portion, a side surface of the lens portion, and a rear surface of the lens portion via an adhesion layer, and
    an edge of part of the antireflection film which is attached onto the rear surface of the lens portion is on the frame region side of the boundary.

4.  The display device of claim 1, further comprising an antireflection film, wherein
    the antireflection film is attached onto the light exit surface of the lens portion, a side surface of the lens portion, and a side surface of the at least one display panel via an adhesion layer, and
    an edge of part of the antireflection film which is attached onto the side surface of the display panel is on the side surface of the display panel.

5.  The display device of claim 1, further comprising an antireflection film, wherein
    the antireflection film is attached onto the light exit surface of the lens portion, a side surface of the lens portion, a side surface of the at least one display panel, and a rear surface of the at least one display panel via an adhesion layer, and
    an edge of part of the antireflection film which is on the rear surface of the display panel is on the frame region side of the boundary.

6.  The display device of any of claims 2 to 5, wherein a corner of the lens portion at which the light exit surface and the side surface of the lens portion meet each other has a curved surface.

7.  The display device of claim 3, wherein
    a corner of the lens portion at which the light exit surface and the side surface of the lens portion meet each other has a curved surface, and
    another corner of the lens portion at which the side surface and the rear surface of the lens portion meet each other has a curved surface.

8.  The display device of claim 2, further comprising a protection tape which includes a support layer and a first adhesion layer provided on one surface of the support layer, wherein
    the protection tape is attached so as to cover an edge of part of the antireflection film which is attached onto the side surface of lens portion and the side surface of the lens portion.

9.  The display device of claim 8, wherein
    the protection tape further includes a second adhesion layer provided on the other surface of the support layer,
    the at least one display panel includes two display panels arranged so as to adjoin each other along a second direction which is perpendicular to the first direction,
    the at least one light-transmitting cover includes two light-transmitting covers arranged so as to adjoin each other along the second direction,
    the lens portions of the two light-transmitting covers adjoin each other along the second direction,

the lens portions of the two light-transmitting covers are covered with the antireflection film via an adhesion layer, the two light-transmitting covers are united together by means of the protection tape, and a dimension along the second direction of the side surface of the lens portions of the two light-transmitting covers is not more than 100 μm.

**10.** A method of manufacturing a display device, comprising the steps of:

(a) providing a light-transmitting cover which includes a lens portion at its edge, a light exit surface of the lens portion being formed by a curved surface;
(b) attaching an antireflection film onto the light exit surface of the lens portion via an adhesion layer with pressure; and
(c) after step (b), attaching the antireflection film onto a side surface of the lens portion with pressure.

**11.** The method of claim 10 further comprising, between step (a) and step (b) or between step (b) and step (c), step (d) of cutting the antireflection film such that an edge of part of the antireflection film attached onto the side surface is present on the side surface of the lens portion.

**12.** The method of claim 10, wherein step (a) includes providing a display panel unit, the display panel unit including a display panel and the light-transmitting cover.

*FIG.1*

*FIG.2*

(a)

(b)

(c)

(d)

## FIG.3

(a)

(b)

*FIG.4*

*FIG.5*

(a)

(b)

FIG.6

(a)

(b)

(c)

*FIG.7*

(a)

22d

30'

302

(b)

304

22d

30'

*FIG.8*

(a)

(b)

(c)

*FIG.9*

*FIG.10*

*FIG.11*

(a)

(b)

(c)

*FIG.12*

*FIG.13*

*FIG.14*

*FIG.15*

*FIG.16*

*FIG.17*

28

*FIG.18*

*FIG.19*

FIG.20

*FIG.21*

*FIG.22*

<table>
<tr><td colspan="2"><b>INTERNATIONAL SEARCH REPORT</b></td><td>International application No.<br>PCT/JP2010/000779</td></tr>
</table>

A.  CLASSIFICATION OF SUBJECT MATTER
*G09F9/00*(2006.01)i, *G02F1/1333*(2006.01)i, *G09F9/40*(2006.01)i

According to International Patent Classification (IPC) or to both national classification and IPC

B.  FIELDS SEARCHED

Minimum documentation searched (classification system followed by classification symbols)
G09F9/00, G02F1/1333, G09F9/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 8-063110 A  (Matsushita Electronics Corp.),<br>08 March 1996 (08.03.1996),<br>paragraphs [0007] to [0012]; fig. 1 to 5<br>& US 5656893 A        & EP 680067 A2<br>& CA 2147902 A        & KR 10-0178306 B | 1<br>2-12 |
| Y<br>A | WO 2008/149449 A1  (Telesystems Co., Ltd.),<br>11 December 2008 (11.12.2008),<br>paragraphs [0026] to [0028], [0036], [0042] to<br>[0049]; fig. 1 to 8<br>(Family: none) | 1<br>2-12 |
| Y<br>A | JP 2004-524551 A  (Seamless Display Ltd.),<br>12 August 2004 (12.08.2004),<br>paragraphs [0028] to [0035]; fig. 1 to 6<br>& US 2004/0051944 A1      & EP 1337892 A<br>& WO 2002/042838 A1 | 1<br>2-12 |

☒  Further documents are listed in the continuation of Box C.    ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>19 March, 2010 (19.03.10) | Date of mailing of the international search report<br>30 March, 2010 (30.03.10) |
| Name and mailing address of the ISA/<br>Japanese Patent Office | Authorized officer |
| Facsimile No. | Telephone No. |

Form PCT/ISA/210 (second sheet) (July 2009)

32

**INTERNATIONAL SEARCH REPORT**

| International application No. |
|---|
| PCT/JP2010/000779 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2002-067075 A  (Maxell Seiki, Ltd.),<br>05 March 2002 (05.03.2002),<br>paragraphs [0013] to [0015], [0020]; fig. 1, 3, 7<br>& TW 538392 B          & KR 10-2002-0016493 A | 1<br>2-12 |
| Y<br>A | JP 2001-277294 A  (Yoshida Kogyo Co., Ltd.),<br>09 October 2001 (09.10.2001),<br>paragraphs [0011], [0018] to [0019], [0033];<br>fig. 1(b), 3, 7<br>(Family: none) | 1<br>2-12 |
| Y | JP 2000-276062 A  (Nokia Mobile Phones Ltd.),<br>06 October 2000 (06.10.2000),<br>paragraphs [0007], [0026] to [0029], [0031];<br>fig. 2 to 4<br>& US 6273573 B1          & GB 2345021 A<br>& EP 1013396 A1 | 1 |
| Y | JP 2007-017833 A  (Matsushita Electric<br>Industrial Co., Ltd.),<br>25 January 2007 (25.01.2007),<br>paragraphs [0029] to [0031]; fig. 1, 2<br>(Family: none) | 1 |

Form PCT/ISA/210 (continuation of second sheet) (July 2009)

**EP 2 398 005 A1**

**Patent documents cited in the description**

- JP 2000180964 A
- WO 2004524551 A
- WO 2006059686 A
- WO 2009019839 A
- WO 2009157150 A
- WO 2009157161 A